# EUROPÄISCHE PATENTANMELDUNG

(11) **EP 0 697 167 A1**
(43) Veröffentlichungstag der Anmeldung: **21.02.1996**
(21) Anmeldenummer: 95112051.8
(22) Anmeldetag: 01.08.1995
(51) Int. Cl.: A01G 9/02, A01G 9/00

(54) **Pflanzgefäss**

(30) Priorität: 04.08.1994 DE 9412600 U
(71) Anmelder: H. Wilhelm Ebert GmbH & Co., D-32051 Herford (DE)
(72) Erfinder: Thüre, Günther, D-13125 Berlin (DE)
(74) Vertreter: Stracke, Alexander, Dipl.-Ing.

(57) **Zusammenfassung**

Bei einem Pflanzgefäß (10) mit einem Außenkörper (11) soll das bisher bekannte Pflanzschema abgelöst werden, indem es ermöglicht wird, eine Vielzahl von Kombinationen an pflanzlichen Formen und Farben zusammenpflanzen zu können.

Gemäß einem ersten Erfindungsvorschlag wird der Außenkörper (11) des Pflanzgefäßes (10) durch vertikakle Trennwände (12,18,19,20) in voneinander getrennte Pflanzkammern (20,21,22) unterteilt. Zur Bildung von höhenmäßig zueinander versetzten Pflanzebenen ist der obere Rand des Außenkörpers (11) entsprechend der Anzahl der Trennwände (18,19,28) stufenförmig ausgebildet.

Gemäß einem zweiten Erfindungsvorschlag wird der Außenkörper (11) mit mindestens einem Einsatzkörper bestückt, dessen Grundfläche kleiner als die des Außenkörpers (11) ist und der eine geschlossene umlaufende Seitenwand aufweist. Der obere Rand des Einsatzkörpers ist gegenüber dem oberen Rand des Außenkörpers (11) nach oben versetzt.

Gemäß einem dritten Erfindungsvorschlag ist der Außenkörper (11) durch wenigstens eine Zwischenwand in zwei voneinander getrennte Pflanzkammern unterteilt. Das Pflanzgefäß ist außerdem einstückig.

Das erfindungsgemäße Pflanzgefäß ist besonders für Wohnräume, Büros, Eingangshallen und dergleichen geeignet.

## Beschreibung

Die vorliegende Erfindung betrifft ein Pflanzgefäß mit einem Außenkörper.

Die in Rede stehenden Pflanzgefäße sind je nach der Nutzung in verschiedenen Ausführungsformen bekannt. Sie werden üblicherweise als Blumentöpfe, Blumenkästen, Pflanzschalen und Pflanzkübel bezeichnet. Bei den bisher bekannten Pflanzgefäßen ist der mit einem Boden versehene, nach oben offene Außenkörper das eigentliche Pflanzgefäß. Sie sind jedoch mit dem Nachteil behaftet, daß sie nur ein starres Pflanzschema zulassen. Außerdem ist es nicht möglich, Pflanzen in ein Pflanzgefäß zu setzen, die von der Art her nicht zusammenpassen. Die bislang bekannten Pflanzgefäße erlauben nur einen äußerst eingeschränkten gestalterischen Bereich, bedingt durch die monofunktionale Form.

Der vorliegenden Erfindung liegt die Aufgabe zugrunde, ein Pflanzgefäß mit einem Außenkörper so zu gestalten, daß das bisher bekannte Pflanzschema abgelöst werden kann, daß eine Vielzahl von Kombinationen an pflanzlichen Formen und Farben ermöglicht wird, und daß auch Arten zusammengepflanzt werden können, die bisher nicht zusammengepflanzt werden konnten.

Gemäß einem ersten Vorschlag wird die gestellte Aufgabe gelöst, indem der Außenkörper des Pflanzgefäßes durch mindestens eine vertikale Trennwand in voneinander getrennte Pflanzkammern unterteilt ist, daß zur Bildung von höhenmäßig zueinander versetzten Pflanzebenen der obere Rand des Außenkörpers entsprechend der Anzahl der Trennwände stufenförmig mit senkrechten Steigungen verspringt, und daß der obere Rand jeder Trennwand höhengleich oder annähernd höhengleich zum oberen Randabschnitt innerhalb der vertikalen Steigung liegt.

Da nunmehr der obere Rand des Außenkörpers entsprechend der Anzahl der Trennwände stufenförmig ausgebildet ist, ergeben sich je nach Anzahl der Trennwände verschiedene Pflanzebenen. Dadurch ist eine terassenförmige Bepflanzung des Pflanzgefäßes möglich, d. h. wie ein stufenförmig ausgebildeter Abhang. Dadurch ergeben sich viele gestalterische Möglichkeiten. Insbesondere ist es auch möglich, unterschiedliche Arten von Pflanzen in dem Pflanzgefäß unterzubringen, da die einzelnen Pflanzkammern voneinander getrennt sind. Als Außenkörper können alle bislang bekannten Pflanzgefäße verwendet werden, beispielsweise runde, quadratische, ovale und mehreckige. Das erfindungsgemäße Pflanzgefäß eignet sich für alle Pflanzarten auf Erd- und Hydrobasis, Trockenfloristik und Naßgestecke, auch für die unterschiedlichsten Medien, wie Sand, Steine, Wasser und Sumpf. Das Pflanzgefäß kann nicht nur einzeln aufgestellt werden, sondern auch gruppiert und/oder vertikal, horizontal, diagonal oder bogenförmig ineinandergreifend oder sich in den Raum hinein entwickeln. Die Pflanzgefäße können aus den unterschiedlichsten Materialien hergestellt werden, wie beispielsweise Kunststoff, Ton, Keramik, Porzellan oder einem Preßstoff aus Biomaterial. Je nach Art des Materials wird ein entsprechendes Herstellverfahren angewendet.

Zweckmäßigerweise liegen die beiden Stirnkanten jeder Trennwand angrenzend zu den vertikalen Steigungen zwischen zwei höhenversetzten Randabschnitten. Dadurch entstehen gegenüber den Trennwänden keine vorstehenden Kanten. Außerdem ist diese Ausführung auch materialsparend. Bevorzugte Ausführungsbeispiele beinhalten einsteckbare Trennwände, bedingt durch ein Bewässerungssystem, bei dem zur Trennung von Wasserbevorratung und Pflanzerde eine Zwischenebene oder ein Zwischenboden eingesetzt wird. In weiterer Ausgestaltung ist vorgesehen, daß jede Trennwand fest mit dem Außenkörper verbunden ist. Dadurch entfallen lose Teile. Der Käufer eines solchen Pflanzgefäßes kann sich außerdem den Endzustand ansehen. Da es jedoch fertigungstechnisch auch günstiger sein kann, ist als Alternative vorgesehen, daß jede Trennwand lose in den Außenkörper einstellbar ist. Dadurch hat auch der Käufer noch gestalterische Möglichkeiten, da er die Trennwände nach seinen Wünschen einstellen kann. Die Trennwände können die vielfältigsten Formen aufweisen. Bevorzugt sind jedoch planebene, gewinkelte und/oder frei geschwungene Formen. Auch die Kombination von mehreren Formen kann äußerst dekorativ sein.

Zur Lösung der gestellten Aufgabe gemäß einer zweiten Ausführungsform ist vorgesehen, daß der Außenkörper mit mindestens einem Einsatzkörper bestückt ist, dessen Grundfläche kleiner als die des Außenkörpers ist und der eine geschlossene umlaufende Seitenwand aufweist. Da der Einsatzkörper die verschiedenartigsten Querschnitte aufweisen kann, läßt sich schon allein dadurch die Gestaltung des Pflanzgefäßes verändern. Außerdem kann er dann noch in den verschiedensten Stellungen zum Außenkörper gebracht werden, wodurch das Erscheinungsbild sich immer wieder verändert. In der einfachsten Form ist der Einsatzkörper ein Ring. Auch für diese Ausführung gelten die bereits vorstehend erwähnten Vorteile. Der Einsatzkörper ist gegenüber dem Außenkörper immer wand- und/oder eckbezogen. Ein weiterer Vorteil liegt darin, daß durch die Trennung des Außenkörpers von dem Einsatzkörper das Verpacken und auch der Vertrieb bzw. der Versand raumsparend durchgeführt werden kann. Sofern der Einsatzkörper sinngemäß wie ein eigenes Pflanzgefäß gesehen werden kann, ist es möglich, beispielsweise Kakteen und Sukkulente getrennt nach den unterschiedlichen Bedürfnissen im Hinblick auf das Substrat und die Bewässerung in ein Pflanzgefäß zu pflanzen. Ferner können durch die Trennung unterschiedliche Ruhezeiten berücksichtigt werden. In weiterer Ausgestaltung ist vorgesehen, daß der obere Rand des Einsatzkörpers gegenüber dem oberen Rand des Außenkörpers nach oben, d. h. zu der dem Boden des Außenkörpers abgewandten Seite verspringt. Dadurch kann beispielsweise durch die Bepflanzung ein Windschutz oder dergleichen erreicht werden. Der Höhenversatz der Ränder kann in einfachster Weise erreicht werden, indem die Höhe des Einsatzkörpers größer ist als die des Außenkörpers. Eine äußerst ansprechende Bepflanzung läßt sich erreichen, wenn die umlaufende Seitenwand des Einsatzkörpers im Bereich oberhalb der Oberkante des Außenkörpers stufenförmig nach außen verspringt. Dadurch wird auch eine Bepflanzung außerhalb der Kontur des Außenkörpers möglich. In dem verspringenden Bereich liegen dann zweckmäßigerweise die Seitenwandungsteile des Grundkörpers und des Einsatzkörpers aneinander. Es ist dann besonders zweckmäßig, daß der verspringende Bereich der Seitenwand des Einsatzkörpers zumindest gegenüber einer Seitenwand des Außenkörpers nach außen verspringt. Es ist jedoch ebenso denkbar, daß der verspringende Bereich der Seitenwand des Einsatzkörpers sich über einen Eckbereich des Außenkörpers erstreckt. Damit die Trennung von Substrat für die unterschiedlichen Pflanzenarten erfolgen kann, ist vorgesehen, daß der Einsatzkörper mit einem geschlossenen oder mit einem mit wenigstens einer Durchbrechung versehenen Boden ausgerüstet ist. Dadurch wird der Einsatzkörper zum normalen Pflanzgefäß. Es muß jedoch dafür Sorge getragen werden, daß eine ausreichende Bewässerung erfolgt. Dies kann beispielsweise durch eine Durchbrechung oder durch die Durchbrechungen erfolgen. Sofern der Einsatzkörper einen geschlossenen Boden aufweist, ist vorgesehen, daß die Seitenwand im unteren Bereich mit Bewässerungsöffnungen versehen ist, die beispielsweise parallel und/oder winklig zum unteren Rand der Seitenwand des Einsatzkörpers stehen. Auch bei dieser Ausführung kann der Außenkörper mit einem parallel zu seinem Boden verlaufenden Zwischenboden ausgerüstet sein, so daß die Langzeitbewässerung gewährleistet ist.

Die gestellte Aufgabe wird gemäß einer dritten Ausführung gelöst, indem der Außenkörper mindestens zwei durch wenigstens eine Zwischenwand voneinander getrennte Pflanzkammern aufweist und als einstückiges Formteil ausgebildet ist, und daß die den Pflanzkammern zugeordneten oberen Ränder der Seitenwand höhenversetzt zueinander stehen. Der obere Rand jeder Zwischenwand liegt dann auf Höhe der höheren Ränder der Pflanzkammern. Diese Ausführung läßt sich besonders vorteilhaft herstellen, da dazu nur ein Werkzeug notwendig ist, wenn der Pflanzkübel aus Kunststoff im Spritzverfahren hergestellt wird. Da die Pflanzgefäße so gestaltet sein müssen, daß sie raumsparend transportiert und gelagert werden können, wobei dann üblicherweise eine Stapelbildung erforderlich wird, ist zur Sicherung der Pflanzgefäße innerhalb eines Stapels dann vorgesehen, daß bei dieser Ausführung die Zwischenwand durch eine doppelwandige Einziehung des Bodens des Außenkörpers gebildet ist, so daß die Einziehung eine Sicherung für gestapelte Pflanzgefäße bildet. Die beiden Wandungen der Einziehung liegen dann im Abstand zueinander, so daß die Zwischenwand eines Pflanzgefäßes in den Schlitz des darüberstehenden Pflanzgefäßes eingreift.

Anhand von Ausführungsbeispielen wird die Erfindung noch näher erläutert. Es zeigen:
- Figur 1: ein erfindungsgemäßes Pflanzgefäß im Grundriß in einer ersten Ausführung,
- Figur 2: eine Seitenansicht in Richtung des Pfeiles II in der Figur 1 gesehen,
- Figur 3: eine Stirnansicht in Richtung des Pfeiles III in Figur 1 gesehen,
- Figur 4: das erfindungsgemäße Pflanzgefäß in einer weiteren Ausführung im Grundriß,
- Figur 5: eine Stirnansicht in Richtung des Pfeiles V in der Figur 1 gesehen,
- Figur 6: eine Seitenansicht in Richtung des Pfeiles VI in der Figur 1 gesehen,
- Figur 7: eine Seitenansicht in Richtung des Pfeiles VII in der Figur 1 gesehen,
- Figur 8: ein erfindungsgemäßes Pflanzgefäß in einer weiteren Ausführung,
- Figur 9: eine Seitenansicht in Richtung des Pfeiles IX gesehen,
- Figur 10: eine Stirnansicht in Richtung des Pfeiles X in der Figur 1 gesehen,
- Figur 11: eine Seitenansicht in Richtung des Pfeiles XI in der Figur 1 gesehen,
- Figur 12: das erfindungsgemäße Pflanzgefäß in einer zweiten Ausführung im Grundriß,
- Figur 13: einen Teilschnit gemäß der Figur 12 längs der Linie XIII-XIII,
- Figur 14: den Einsatzkörper als Einzelheit im Aufriß,
- Figur 15: den Einsatzkörper im Querschnitt längs der Linie XV-XV in der Figur 12,
- Fig. 16 - 19: die in Figuren 12 bis 15 entsprechende Darstellungen einer ähnlichen Ausführung,
- Fig. 20 - 23: die in Figuren 12 bis 15 entsprechende Darstellungen einer abgewandelten Ausführung,
- Figur 24: das erfindungsgemäße Pflanzgefäß in einer Variante im Grundriß,
- Figur 25: das Pflanzgefäß nach der Figur 24 im Teilschnitt längs der Linie XXV-XXV,
- Figur 26: den Einsatzkörper im Querschnitt längs der Linie XXVI-XXVI in der Figur 24
- Figur 27: das erfindungsgemäße Pflanzgefäß in einer weiteren Ausführung im Grundriß,
- Figur 28: das Pflanzgefäß nach der Figur 27 im Teilschnitt längs der Linie XXVIII-XXVIII in der Figur 27,
- Figur 29: den Einsatzkörper als Einzelheit im Aufriß,
- Figur 30: den Einsatzkörper im Querschnitt längs der Linie XXX-XXX in der Figur 27,
- Figur 31: ein einstückiges Pflanzgefäß mit zwei Pflanzkammern im Vertikalschnitt,
- Figur 32: das Pflanzgefäß nach der Figur 31 in einer Seitenansicht,
- Figur 33: das Pflanzgefäß nach der Figur 31 im Grundriß,
- Fig. 34 - 36: eine gegenüber der Ausführung nach den Figuren 31 bis 33 abgewandelte Ausführung.

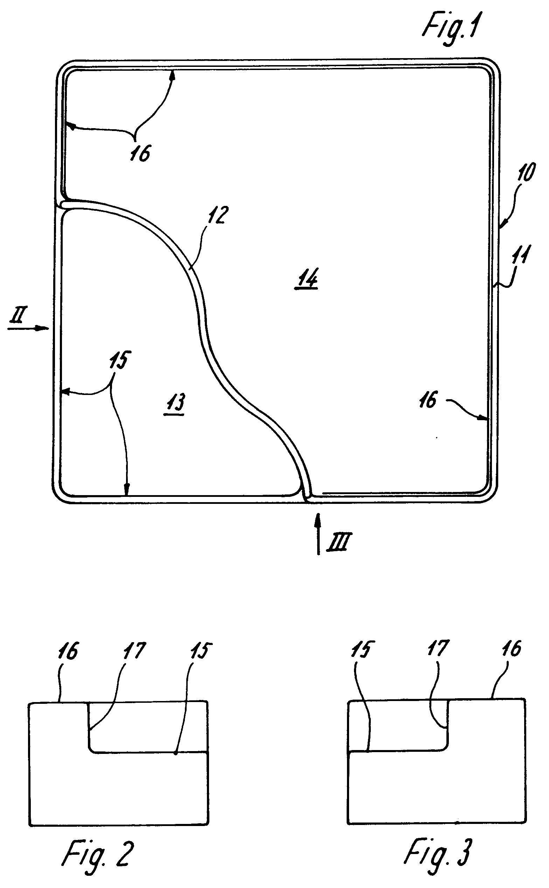

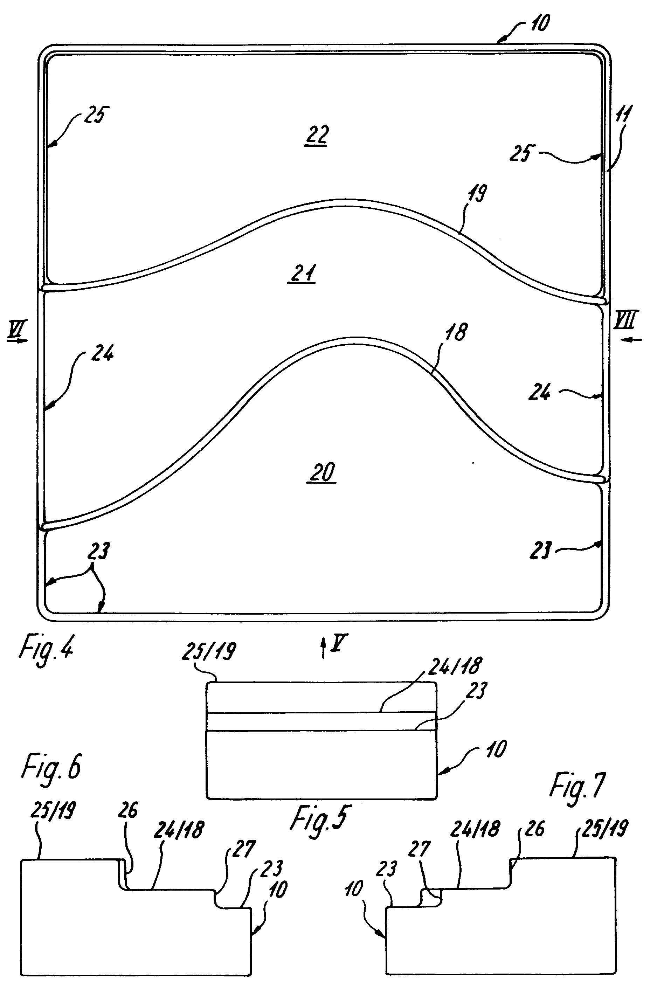

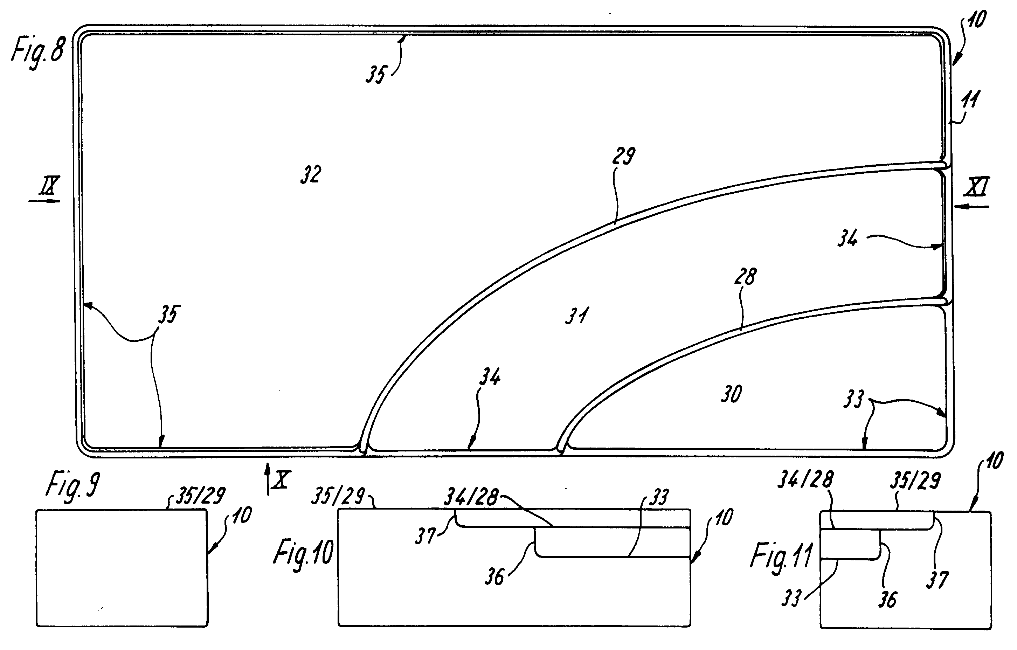

Das in den Figuren 1 bis 3 dargestellte Pflanzgefäß 10 in Form eines Pflanzkübels hat einen Außenkörper 11 mit einem quadratischen Grundriß. Das Pflanzgefäß 10 ist mittels einer vertikalen Trennwand 12 in zwei Pflanzkammern 13, 14 unterteilt. Diese Trennwand 12 ist, in der Projektion gesehen, wellenförmig ausgebildet und erstreckt sich über einen Eckbereich des Pflanzgefäßes 10, d. h. von einer Wandung aus zu der rechtwinklig dazu stehenden Wandung. Der obere umlaufende Rand des Außenkörpers 11 ist stufenförmig ausgebildet, wie die Figuren 2 und 3 zeigen. Der obere Randabschnitt 15 des von der Trennwand 12 begrenzten Eckbereiches hat eine geringere Höhe als der restliche Randabschnitt 16. Der obere Rand der Trennwand 12 liegt auf Höhe des Randabschnittes 16. Die vertikale Steigung des oberen Randes des Außenkörpers 11 ist durch das Bezugszeichen 17 gekennzeichnet. Die Stirnwände der Trennwand 12 liegen angrenzend an diese vertikalen Steigungen 17. Das in der Figur 4 dargestellte Pflanzgefäß 10 hat wiederum einen Außenkörper 11 mit quadratischem Grundriß. Dieses Pflanzgefäß ist mit zwei Trennwänden 18, 19 ausgerüstet, die sich von einer Seitenwand zur gegenüberliegenden erstrecken. Demzufolge ist der Außenkörper 11 in drei Pflanzkammern 20, 21, 22 unterteilt. Der obere Rand des Außenkörpers 11 ist in drei Randabschnitte 23, 24, 25 unterschiedlicher Höhe unterteilt. Der von der Trennwand 18 begrenzte Randabschnitt 23 liegt gemäß der Figur 5 auf dem niedrigsten Niveau, d. h. der Abstand zum Boden des Außenkörpers 11 ist der geringste. Der obere Rand der Trennwand 18 liegt auf Höhe des Randabschnittes 24 und ist gegenüber dem Randabschnitt 23 nach oben versetzt. Der obere Rand der Trennwand 19 liegt auf Höhe des Randabschnittes 25 und wiederum gegenüber dem Randabschnitt 24 nach oben versetzt. Dabei ist der Versatz größer als der zwischen dem Randabschnitt 23 und 24. Die Trennwände sind bogenförmig gestaltet, jedoch auch noch unterschiedlich. Weitere Variationen sind denkbar. Die Figuren 6 und 7 zeigen besonders, daß der obere Rand des äußeren Körpers 11 stufenförmig verspringt. Die vertikalen Steigungen sind durch die Bezugszeichen 26, 27 gekennzeichnet. Das in den Figuren 8 bis 11 dargestellte Pflanzgefäß 10 hat einen Außenkörper 11 mit einem rechteckigen Grundriß, deren Seitenlängen ungleich sind. Der in der Darstellung rechte, vordere Eckbereich ist durch zwei Trennwände 28, 29 unterteilt, die bogenförmig ausgebildet und in einem gleichbleibenden Abstand zueinander angeordnet sind. Dadurch entstehen drei Pflanzkammern 30, 31, 32, wobei der Grundriß der Pflanzkammer 32 wesentlich größer ist als der der Pflanzkammer 30 bzw. 31. Dadurch entstehen wiederum drei Randabschnitte 33, 34 und 35, die gegeneinander höhenversetzt sind. Der der Ecke zugeordnete winkelförmige Randabschnitt 33 hat die geringste Höhe. Die zwischen den Trennwänden 28, 29 liegenden Randabschnitte 34 haben eine größere Höhe, d. h. sie stehen gegenüber dem Randabschnitt 33 nach oben vor. Der obere Rand der Trennwand 28 liegt wiederum auf Höhe der Randabschnitte 34. Der Randabschnitt 35 und der obere Rand der Trennwand 29 liegen auf gleicher Höhe und sind gegenüber den Randabschnitten 34 und dem oberen Rand der Trennwand 28 nach oben versetzt. Die vertikalen Steigungen des Randes des Außenkörpers 11 sind durch die Bezugszeichen 36, 37 gekennzeichnet.

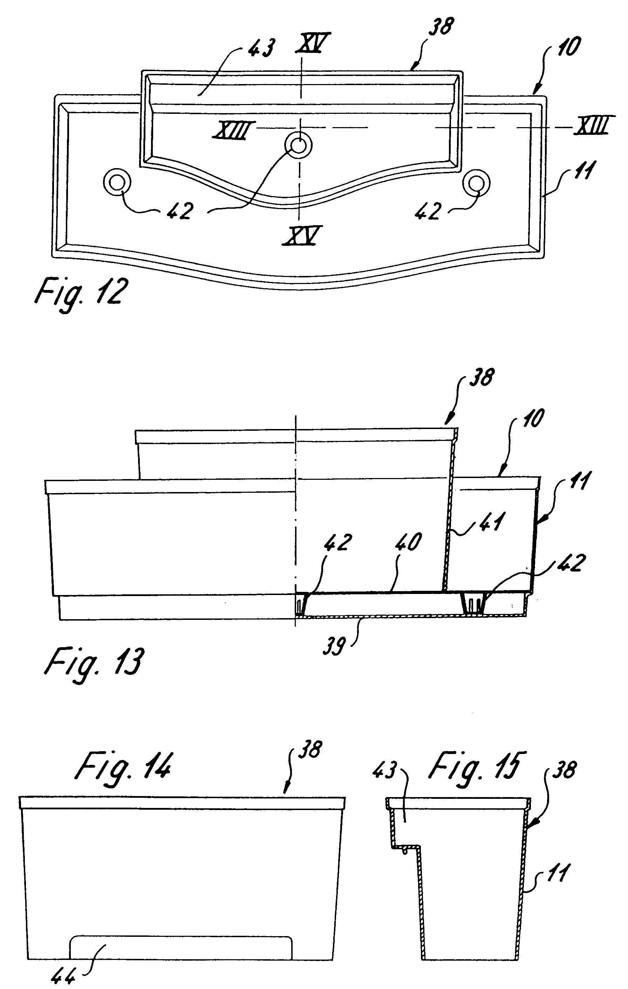

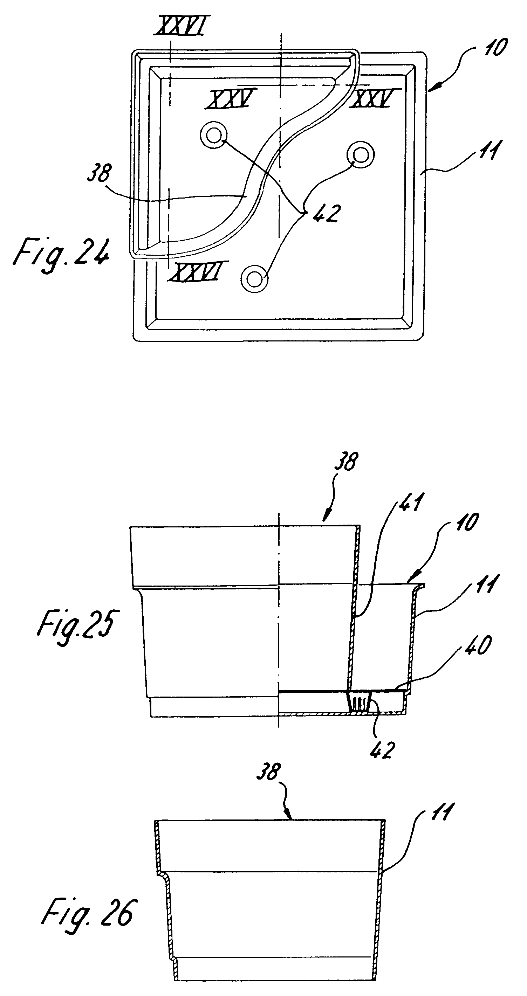

In den Figuren 12 bis 30 sind verschiedene Ausführungen dargestellt, die beispielhaft zu sehen sind, in denen das Pflanzgefäß 10 aus einem Außenkörper 11 und einem Einsatzkörper 38 besteht. Bei den Ausführungen gemäß den Figuren 12 bis 26 ist der Außenkörper 11 viereckig gestaltet und mit einem im geringen Abstand zum Boden 39 stehenden Zwischenboden 40 versehen, so daß zwischen dem Boden 39 und dem Zwischenboden 40 eine Kammer zur Wasserbevorratung gebildet ist. Der Einsatzkörper 38 stützt sich auf diesem Zwischenboden ab. In den dargestellten Ausführungsbeispielen ist der Einsatzkörper 38 im Horizontalschnitt ringförmig ausgebildet, so daß er eine geschlossene, umlaufende Seitenwand 41 aufweist. Der Rand des Zwischenbodens 40 stützt sich auf Einziehungen der Seitenwände des Außenkörpers 11 ab. Zusätzlich sind an der unteren, dem Boden des Außenkörpers 11 zugewandten Seite mehrere Stützen 42 angeformt. Im Gegensatz zu den dargestellten Ausführungen kann der Einsatzkörper 38 auch mit einem Boden versehen sein. Im unteren Bereich ist die Seitenwand 41 dann mit Bewässerungsöffnungen in Form von vertikalen und/oder horizontalen Schlitzen versehen. Bei den Ausführungen gemäß den Figuren 12 bis 30 ist die Höhe des Einsatzkörpers 38 größer als die des Außenkörpers 11, so daß die oberen Ränder des Einsatzkörpers 38 gegenüber den oberen Rändern des Außenkörpers 11 nach oben versetzt sind, d. h. zu der dem Boden des Außenkörpers 11 abgewandten Seite hin. Aus den Figuren ergibt sich außerdem, daß die Grundfläche des Einsatzkörpers 38 deutlich geringer ist als die des Außenkörpers 11. Bei der Ausführung nach den Figuren 12 bis 15 sind die Breiten des Außenkörpers 11 und des Einsatzkörpers 38 deutlich größer als die Tiefen. Zwei einander zugeordnete Längsseitenwände sind bogenförmig ausgebildet, wobei der Verlauf der Bögen ähnlich ist. Die gegenüberliegende Längsseitenwand des Einsatzkörpers 38 ist im oberen Bereich stufenförmig ausgebildet, so daß dieser Bereich nach außen verspringt, so daß er im Versatz zu der zugeordneten Seitenwand des Außenkörpers 11 steht. Der verspringende Bereich 43 liegt dann oberhalb der oberen Kante der zugeordneten Seitenwand des Außenkörpers 11. Der Einsatzkörper 38 ist im unteren Bereich zumindest an einer Seite mit einer Durchbrechung 44 zur Bewässerung des Substrates des Einsatzkörpers 38 versehen.

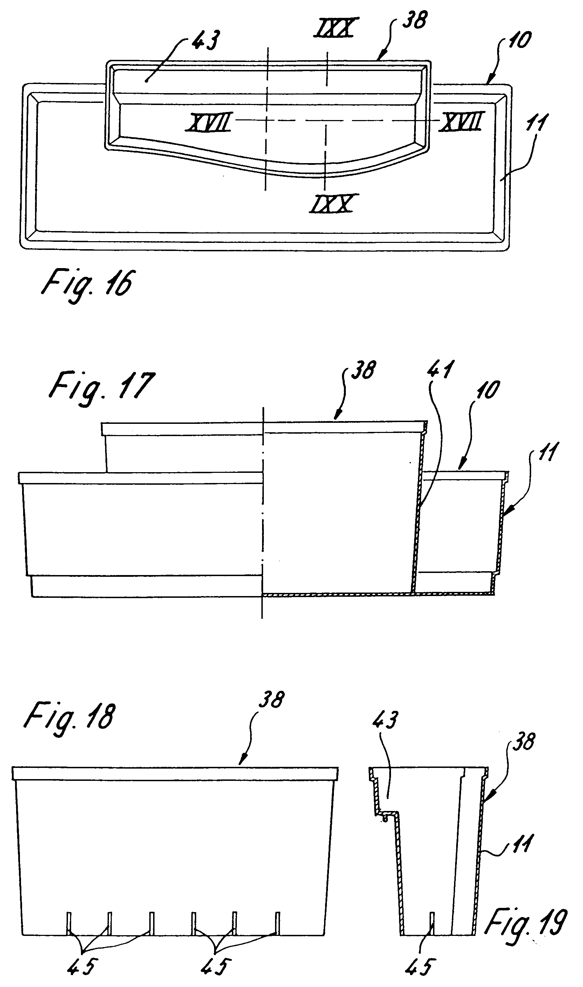

Bei der in den Figuren 16 bis 19 dargestellten Ausführung ist ausschließlich eine Längsseitenwand des Einsatzkörpers 38 bogenförmig gestaltet, während die Seitenwände des Außenkörpers 11 geradlinig verlaufen. Ferner fehlt der Zwischenboden 40, so daß sich der Einsatzkörper 38 auf dem Boden des Außenkörpers 11 abstützt. Zur Bewässerung des Substrates des Einsatzkörpers 38 ist die Seitenwand 41 des Einsatzkörpers 38 im unteren Bereich mit mehreren winklig zum Boden des Außenkörpers 11 verlaufenden Schlitzen 45 versehen, die Bewässerungsöffnungen bilden.

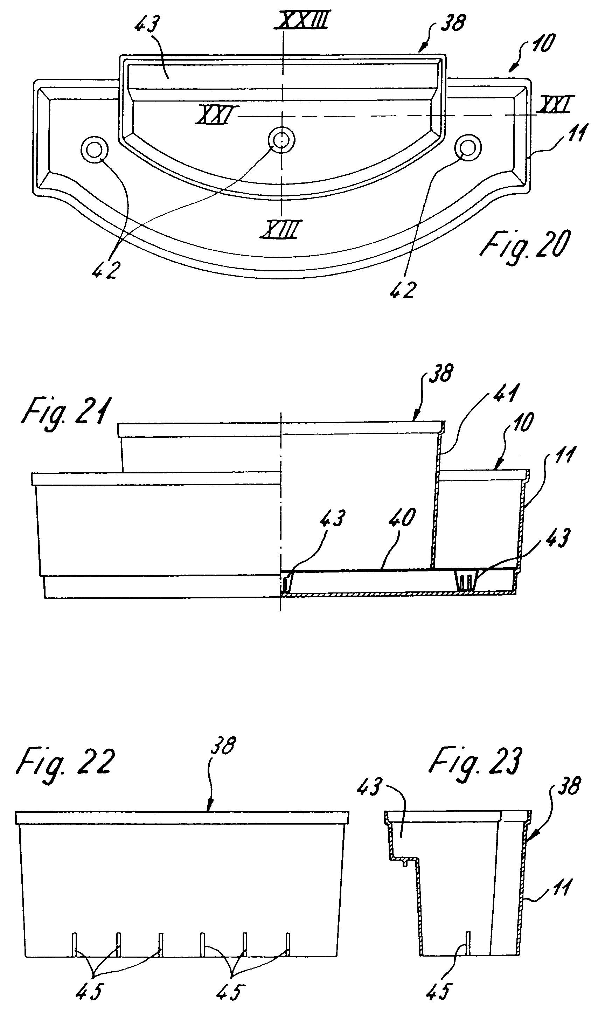

Die Ausführungen gemäß den Figuren 20 bis 23 unterscheiden sich von den beiden Ausführungen nach den Figuren 12 bis 19 zunächst dadurch, daß trotz des Zwischenbodens 40, auf den sich der Einsatzkörper 38 abstützt, dieser wiederum mit den Schlitzen 45 als Bewässerungsöffnungen versehen ist. Außerdem ist der Verlauf der bogenförmigen sechs Seitenwände des Außenkörpers 11 und des Einsatzkörpers 38 anders als bei der Ausführung nach den Figuren 12 bis 15. Bei den Ausführungen nach den Figuren 12 bis 23 ist der Einsatzkörper 38 wandbezogen, da sich Teilbereiche beider Seitenwandungen berühren. Ferner liegt der Einsatzkörper 38 mittig zwischen den beiden kürzeren Seitenwänden des Außenkörpers 11.

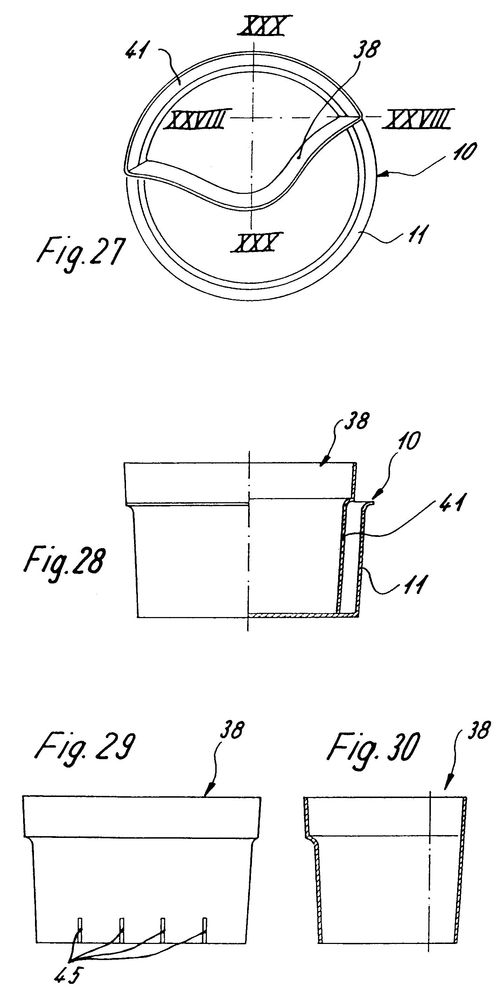

In den Figuren 24 bis 30 werden zwei Ausführungen dargestellt, die eckbezogen sind. Bei der Ausführung nach den Figuren 24 bis 26 ist der Außenkörper 11 im Grundriß quadratisch ausgebildet. Er ist wiederum mit einem Zwischenboden 40 und den Stützen 42 ausgerüstet. Die beiden rechtwinklig zueinander stehenden Bereiche der umlaufenden Seitenwand 41 sind den entsprechenden Bereichen der Seitenwände des Außenkörpers 11 zugeordnet. Der andere Bereich der Seitenwand 41 ist bogenförmig ausgebildet und verläuft innerhalb der Kontur des Außenkörpers 11. Auch bei dieser Ausführung könnte der Einsatzkörper 38 im unteren Bereich mit den Schlitzen 45 ausgerüstet sein. Bei der Ausführung nach den Figuren 27 bis 30 ist der Außenkörper 11 im Grundriß kreisringförmig ausgebildet. Diese Ausführung wäre beispielsweise als Hängeampel geeignet. Ein Teilbereich der Außenwand 41 des Einsatzkörpers 38 folgt dem zugeordneten Bereich der Seitenwand des Außenkörpers 11. Der innerhalb der Kontur des Außenkörpers 11 liegende Bereich verläuft bogenförmig. Auch bei dieser Ausführung könnte der Außenkörper 11 mit einem Zwischenboden 40 versehen sein. Der Einsatzkörper 38 ist wiederum mit den Schlitzen 45 versehen. Bei allen in den Figuren 12 bis 30 dargestellten Ausführungen liegen die oberen Kanten des Einsatzkörpers 38 über den oberen Randen des Außenkörpers 11.

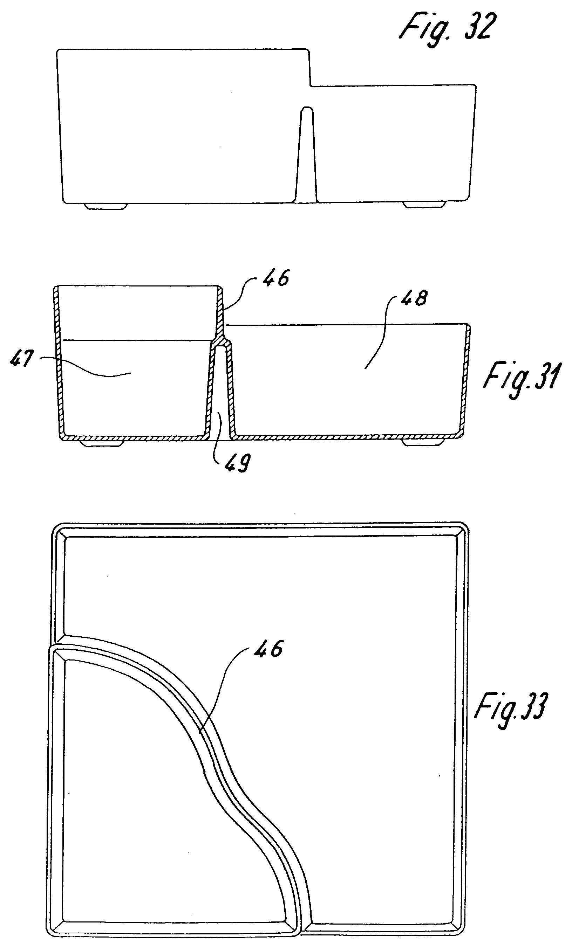

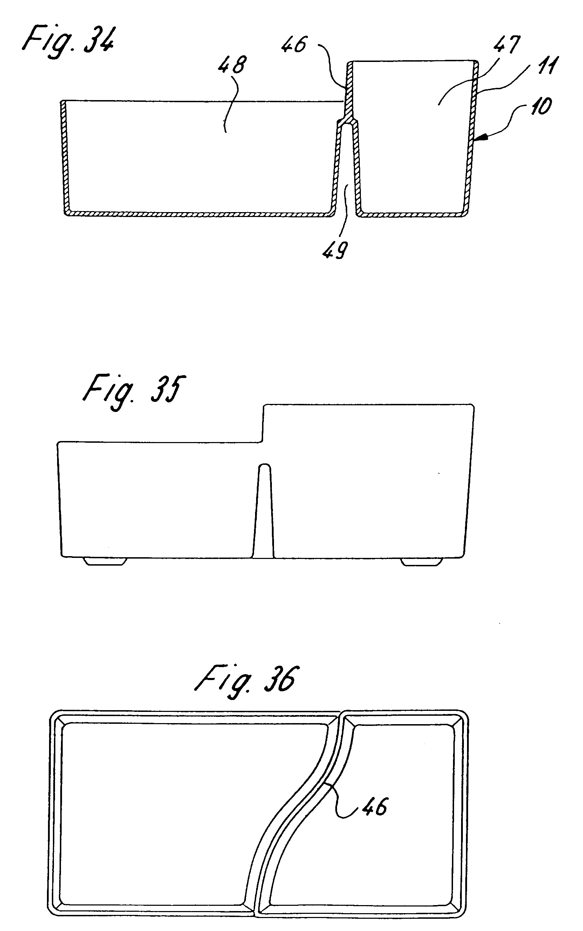

In den Figuren 31 bis 36 ist eine dritte Variante in zwei verschiedenen Ausführungen bekannt. Danach besteht das Pflanzgefäß 10 aus einem Außenkörper 11, der durch eine Zwischenwand 46 in zwei Pflanzkammern 47 und 48 unterteilt ist. Die Höhe der Pflanzkammer 47 ist größer als die der Pflanzkammer 48. Während bei der Ausführung gemäß den Figuren 31 bis 33 die Zwischenwand 46 sich über eine Ecke erstreckt, verläuft sie bei der Ausführung nach den Figuren 34 bis 36 von einer Seitenwand zur gegenüberliegenden Seitenwand des Außenkörpers 11. Der Außenkörper 11 ist bei der Ausführung nach den Figuren 31 bis 33 im Grundriß quadratisch, bei der Ausführung nach den Figuren 34 bis 36 rechteckig, wobei die Längen der rechtwinklig zueinander stehenden Seitenwände ungleich sind. Bei diesen beiden Ausführungen ist der Außenkörper 11 ein einstückiges Formteil. Die Trennwand ist u. a. durch eine vom Boden sich erstreckende Einziehung 49 gebildet, die sich jedoch nicht über die gesamte Höhe der angrenzenden Pflanzkammern 47 bzw. 48 erstreckt. Die Einziehung 49 ist doppelwandig, während der darüberliegende Teil der Zwischenwand 46 einlagig ist. Aus den Figuren ergibt sich, daß beim Stapeln der Pflanzgefäße 10 der obere Bereich der einwandigen Zwischenwand 46 in die Einziehung 49 des darüberliegenden Pflanzgefäßes 10 eingreift, so daß dadurch eine Stapelsicherung geschaffen wird.

Aus den Figuren ergibt sich, daß eine Vielzahl von Ausführungsbeispielen denkbar ist. Wesentlich ist, daß bei den in den Figuren 1 bis 11 dargestellten Ausführungsbeispielen von der niedrigsten Ecke aus die Trennwände und die zugeordneten Randabschnitte kontinuierlich stufenförmig nach oben versetzt sind. In diesen dargestellten Beispielen sind die Trennwände fest mit dem Außenkörper 11 verbunden. Es ergibt sich aus den Zeichnungen, daß sie auch beim Auffüllen mit Pflanzerde oder einem sonstigen Mittel in den Außenkörper 11 eingestellt werden können.

Bei dem erfindungsgemäßen Pflanzgefäß gibt es keine begrenzte Anzahl von Pflanzkammern. Je nach Verwendungszweck und Größe des Pflanzgefäßes kann es viele gleichartige oder unterschiedlich geartete Pflanzkammern aufweisen, beispielsweise kann es ein Bodenpflanzgefäß mit bis zu sechs oder mehr Pflanzkammern sein. Bei den Ausführungsbeispielen nach den Figuren 12 bis 36 überragt der obere Bereich des Einsatzkörpers 38 den Außenkörper 11. In Umkehrung ist es jedoch auch denkbar, daß der obere Rand des Einsatzkörpers 38 tiefer liegt als der obere Rand des Außenkörpers 11. Dies ist beispielsweise bei den eckbezogenen Einsatzkörpern 38 denkbar.

## Patentansprüche

1. Pflanzgefäß mit einem Außenkörper, **dadurch gekennzeichnet, daß** der Außenkörper (11) des Pflanzgefäßes (10) durch mindestens eine vertikale Trennwand (12, 18, 19, 28, 29) in voneinander getrennte Pflanzkammern (13, 14, 20, 21, 22, 30, 31, 32) unterteilt ist, daß zur Bildung von höhenmäßig zueinander versetzten Pflanzebenen der obere Rand des Außenkörpers (11) entsprechend der Anzahl der Trennwände (12, 18, 19, 28, 29) stufenförmig mit vertikalen Steigungen (17, 26, 27, 36, 37) verspringt und daß der obere Rand jeder Trennwand (12, 18, 19, 28, 29) höhengleich oder annähernd höhengleich zum oberen Randabschnitt (16, 24, 25, 34, 35) innerhalb der vertikalen Steigung (17, 26, 27, 36, 37) liegt.

2. Pflanzgefäß nach Anspruch 1, **dadurch gekennzeichnet, daß** die beiden Stirnkanten jeder Trennwand (12, 18, 19, 28, 29) angrenzend zu den vertikalen Steigungen (17, 26, 27, 36, 37) zwischen zwei höhenversetzten Randabschnitten (15, 16, 23, 24, 25, 33, 34, 35) liegen.

3. Pflanzgefäß nach Anspruch 1 oder 2, **dadurch gekennzeichnet, daß** jede Trennwand (12, 18, 19, 28, 29) fest mit dem Außenkörper (11) verbunden ist.

4. Pflanzgefäß nach Anspruch 1 oder 2, **dadurch gekennzeichnet, daß** jede Trennwand (12, 18, 19, 28, 29) lose in den Außenkörper (11) einstellbar ist.

5. Pflanzgefäß nach einem oder mehreren der vorhergehenden Ansprüche 1 bis 4, **dadurch gekennzeichnet, daß** jede Trennwand (12, 18, 19, 28, 29) in der Projektion gesehen eine gerade, gewinkelte und/oder frei geschwungene Form aufweist.

6. Pflanzgefäß nach einem oder mehreren der vorhergehenden Ansprüche 1 bis 5, **dadurch gekennzeichnet, daß** der Außenkörper (11) mittels einer über einen Eckbereich sich erstreckenden Trennwand (12) in zwei Pflanzkammern (13, 14) unterteilt ist.

7. Pflanzgefäß nach einem oder mehreren der vorhergehenden Ansprüche 1 bis 5, **dadurch gekennzeichnet, daß** der Außenkörper (11) des Pflanzgefäßes (10) durch zwei vorzugsweise bogenförmig ausgebildete Trennwände (18, 19) in drei Pflanzkammern (20, 21, 22) unterteilt ist, und daß die Trennwände (18, 19) sich von einer Seitenwand bis zur gegenüberliegenden Seitenwand des Außenkörpers (11) erstrecken.

8. Pflanzgefäß nach einem oder mehreren der vorhergehenden Ansprüche 1 bis 5, **dadurch gekennzeichnet, daß** ein Eckbereich des Außenkörpers (11) des Pflanzgefäßes (10) durch zwei bogenförmige Trennwände (28, 29) in drei Pflanzkammern (30, 31, 32) unterteilt ist, und daß die beiden Trennwände (28, 29) in einem gleichbleibenden oder annähernd gleichbleibenden Abstand zueinander stehen.

9. Pflanzgefäß mit einem Außenkörper, **dadurch gekennzeichnet, daß** der Außenkörper (11) mit mindestens einem Einsatzkörper (38) bestückt ist, dessen Grundfläche kleiner als die des Außenkörpers (11) ist und der eine geschlossene umlaufende Seitenwand (41) aufweist.

10. Pflanzgefäß nach Anspruch 9, **dadurch gekennzeichnet, daß** der obere Rand des Einsatzkörpers (38) gegenüber dem oberen Rand des Außenkörpers nach oben versetzt ist.

11. Pflanzgefäß nach Anspruch 10, **dadurch gekennzeichnet, daß** die Höhe des Einsatzkörpers (38) größer ist als die des Außenkörpers (11).

12. Pflanzgefäß nach Anspruch 9, **dadurch gekennzeichnet, daß** die umlaufende Seitenwand (41) des Einsatzkörpers (38) im Bereich oberhalb der Oberkante des Außenkörpers (11) stufenförmig nach außen verspringt.

13. Pflanzgefäß nach Anspruch 12, **dadurch gekennzeichnet, daß** der verspringende Bereich (43) der Seitenwand (41) des Einsatzkörpers (38) zumindest gegenüber einer Seitenwand des Außenkörpers (11) nach außen verspringt.

14. Pflanzgefäß nach einem oder mehreren der vorhergehenden Ansprüche 9 bis 13, **dadurch gekennzeichnet, daß** der Einsatzkörper 38 mit einem geschlossenen oder mit einem mit wenigstens einer Durchbrechung versehenen Boden ausgerüstet ist.

15. Pflanzgefäß nach einem oder mehreren der vorhergehenden Ansprüche 9 bis 13, **dadurch gekennzeichnet, daß** die Seitenwand (41) des Einsatzkörpers (38) im unteren Bereich mit Bewässerungsöffnungen versehen ist.

16. Pflanzgefäß nach Anspruch 15, **dadurch gekennzeichnet, daß** die Bewässerungsöffnungen parallel und/oder winklig zum unteren Rand des Einsatzkörpers (38) stehende Schlitze (45) sind.

17. Pflanzgefäß mit einem Außenkörper, **dadurch gekennzeichnet, daß** der Außenkörper (11) mindestens zwei durch wenigstens eine Zwischenwand (46) voneinander getrennte Pflanzkammern (47, 48) aufweist und als einstückiges Formteil ausgebildet ist, und daß die den Pflanzkammern (47, 48) zugeordneten oberen Ränder der Seitenwand höhenversetzt zueinander stehen.

18. Pflanzgefäß nach Anspruch 17, **dadurch gekennzeichnet, daß** die Zwischenwand (46) zumindest teilweise durch eine doppelwandige Einziehung (49) des Bodens des Außenkörpers (11) gebildet ist, so daß die Einziehung eine Sicherung für gestapelte Pflanzgefäße (10) bildet.
